# EUROPEAN PATENT APPLICATION

(11) **EP 4 596 666 A1**
(43) Date of publication of application: **06.08.2025**
(21) Application number: 22962129.7
(22) Date of filing: 14.10.2022
(51) Int. Cl.: C12G 3/022

(54) **LIQUEFYING DEVICE AND LIQUEFYING METHOD**

(71) Applicant: Fukui Syuzo Co., Ltd., Toyohashi-shi, Aichi 441-8065 (JP); FOP Engineering Ltd., Toyohashi-shi, Aichi 441-8151 (JP)
(72) Inventor: FUKUI Tomohiro, Toyohashi-shi, Aichi 441-8065 (JP); AKAI Tomohisa, Toyohashi-shi, Aichi 441-8065 (JP); AKAI Yuuko, Toyohashi-shi, Aichi 441-8065 (JP)
(74) Representative: Prüfer & Partner mbB Patentanwälte · Rechtsanwälte
(86) International application number: PCT/JP2022/038478
(87) International publication number: WO 2024/079912

(57) **Abstract**

Leading ends of supply pipes 4, 22 that supply steam to the interior of a liquefying tank 2 are connected to a bottom portion of the liquefying tank 2. Accordingly, with the steam rising in a raw material M from the bottom portion of the liquefying tank 2, the raw material can be efficiently heated. Also, a liquid surface Ma of the raw material M will not come into contact with the supply pipes 4, 22 through which the steam passes, and it is therefore possible to suppress scorching of the raw material M**.** That is, even in the case where the raw material M is boiled up at high temperatures, it is possible to obtain a liquefied raw material L without scorch. By using this liquefied raw material L without scorch to brew sake, it is possible to brew sake having good flavor.

## Description

### TECHNICAL FIELD

The present invention relates to a liquefying device and a liquefying method, and particularly relates to a liquefying device and a liquefying method that can provide sake having good flavor.

### BACKGROUND ART

Technologies for brewing sake from a raw material obtained by boiling up rice with water, followed by liquefaction (hereinafter, referred to as a "liquefied raw material") are known. For example, Patent Document 1 describes a technology in which a liquefying tank 20 into which rice (milled rice) and water serving as a raw material are introduced is provided, and steam is supplied into a jacket 22 covering the outer peripheral surface of the liquefying tank 20. According to the technology, the liquefying tank 20 is heated by the steam supplied into the jacket 22, so that the raw material in the liquefying tank 20 can be boiled up. Then, the liquefied raw material obtained by boiling up the raw material can be transferred to a subsequent step (e.g., a fermentation tank 24) through a transport pipe 23, and it is therefore possible to improve the productivity of sake compared with conventional brewing methods in which sake is brewed from steamed rice obtained by steaming rice with steam.

### PRIOR ART DOCUMENT

### PATENT DOCUMENT

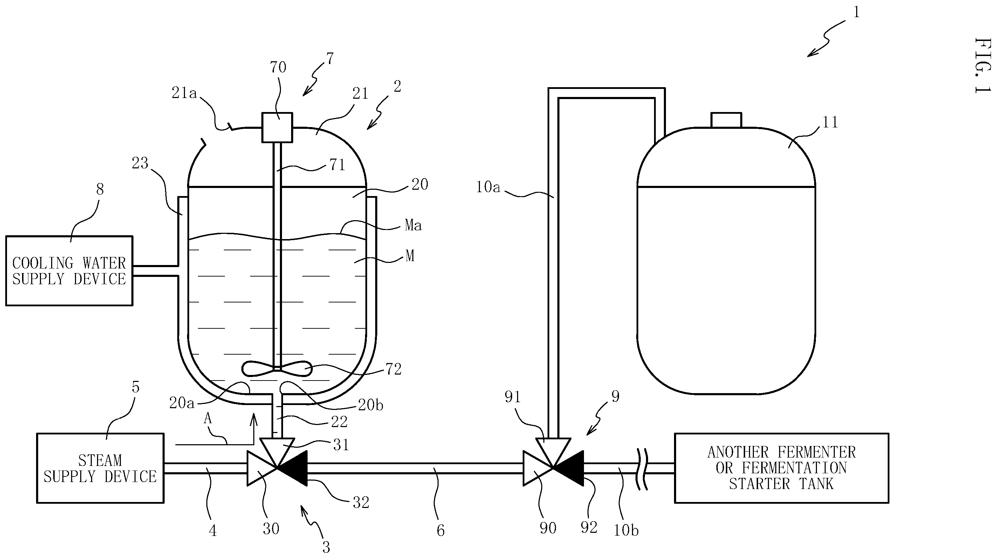

Patent Document 1: Japanese Patent Application Laid-Open (kokai) No. S61-260871 (e.g., line 18 in the upper right column to line 7 in the lower left column of page 2, FIG. 1)

### SUMMARY OF THE INVENTION

### PROBLEM TO BE SOLVED BY THE INVENTION

For the existing sake made by conventional brewing methods, steamed rice that has been steamed at a temperature of 95 to 98°C is used. Accordingly, in order to obtain sake having good flavor similar to the existing sake, it is preferable that the liquefied raw material is boiled up at high temperatures also when sake is brewed from the liquefied raw material as in the case of Patent Document 1 described above.

However, with a configuration in which steam is supplied to the jacket 22 provided around the outer periphery of the liquefying tank 20 as in the technology described in Patent Document 1, the raw material in the liquefying tank 20 cannot be efficiently heated. That is, in order for the raw material in the liquefying tank 20 to be boiled up at high temperatures, steam at a very high temperature needs to be supplied into the jacket 22. When such high-temperature steam is supplied into the jacket 22, the temperature of the wall surface of the liquefying tank 20 also becomes excessively high, so that the liquid surface of the raw material that is in contact with the wall surface tends to scorch. The occurrence of scorching in the liquefied raw material results in the problem that sake having good flavor cannot be brewed.

To solve this problem, the Applicants of the present application have arrived at a configuration (unknown at the time of filing the present application) in which a supply pipe for supplying steam is inserted to the interior (raw material) of the liquefying tank 20, to directly supply steam into the raw material. This configuration allows the raw material to be boiled up at high temperatures even with steam at a relatively low temperature, as compared with the case where steam is supplied into the jacket 22 as in the case of Patent Document 1 described above. However, even with such a configuration, the liquid surface of the raw material that is in contact with the outer peripheral surface of the supply pipe may be scorched, thus still making it difficult to brew sake having good flavor.

The present invention has been made to solve the above-described problem, and an object of the invention is to provide a liquefying device and a liquefying method that can provide sake having good flavor.

### MEANS FOR SOLVING THE PROBLEM

In order to attain this object, a liquefying device according to the present invention includes: a liquefying tank into which a raw material composed of rice and water is introduced; and a supply pipe having a leading end connected to a bottom portion of the liquefying tank, the supply pipe being configured to supply steam from a steam supply source to an interior of the liquefying tank.

A liquefying method according to the present invention is a raw material liquefying method using a liquefying device including: a liquefying tank into which a raw material composed of rice and water is introduced; and a supply pipe having a leading end connected to a bottom portion of the liquefying tank, the supply pipe being configured to supply steam from a steam supply source to an interior of the liquefying tank. The liquefying method includes: a first heating step of supplying steam at a first predetermined temperature from the supply pipe to the liquefying tank into which the raw material has been introduced; and a second heating step of, after the first heating step, supplying steam at a second predetermined temperature higher than the first predetermined temperature from the supply pipe to the liquefying tank.

### ADVANTAGEOUS EFFECTS OF THE INVENTION

With the liquefying device according to claim 1, the leading end of the supply pipe that supplies steam to the interior of the liquefying tank is connected to the bottom portion of the liquefying tank. Accordingly, with the steam rising in the raw material from the bottom portion of the liquefying tank, the raw material can be efficiently heated. Also, a liquid surface of the raw material will not come into contact with the supply pipe through which the steam passes, and it is therefore possible to suppress scorching of the raw material. That is, even in the case where the raw material is boiled up at high temperatures, it is possible to obtain a liquefied raw material without scorch. Using this liquefied raw material without scorch to brew sake provides the effect of enabling brewing sake having good flavor.

The liquefying device according to claim 2 provides the following effect, in addition to the effect provided by the liquefying device according to claim 1. The liquefying device includes a delivery pipe branched from the supply pipe, and the liquefied raw material obtained by liquefying the raw material is delivered from the liquefying tank via the supply pipe and the delivery pipe. Accordingly, there is no need to separately provide the liquefying tank with a part for connecting the delivery pipe. This provides the effect of enabling simplifying the structure of the liquefying tank.

The liquefying device according to claim 3 provides the following effect, in addition to the effect provided by the liquefying device according to claim **2.** By bringing the first switching valve into a state (first state) in which supply of steam from the supply pipe to the delivery pipe is blocked, while supply of steam from the supply pipe to the liquefying tank is enabled, the raw material is heated with the steam supplied to the interior of the liquefying tank, and a liquefied raw material can be obtained by the heating of the raw material. By switching, after obtaining the liquefied raw material, the first switching valve into a state (second state) in which supply of steam from the supply pipe to the liquefying tank is blocked, while delivery of the liquefied raw material from the liquefying tank to the delivery pipe is enabled, the liquefied raw material in the liquefying tank can be delivered from the delivery pipe.

By switching, after delivering the liquefied raw material from the liquefying tank, the first switching valve into a state (first state) in which supply of steam from the supply pipe to the delivery pipe is blocked, while supply of steam from the supply pipe to the liquefying tank is enabled, the interior of the liquefying tank can be sterilized with the steam supplied from the delivery pipe. By switching, after sterilizing the interior of the liquefying tank, the first switching valve into a state (third state) in which supply of steam from the supply pipe to the liquefying tank is blocked, while supply of steam from the supply pipe to the delivery pipe is enabled, the interior of the delivery pipe can be sterilized with the steam supplied from the supply pipe. That is, the liquefying device according to claim 3 provides the effect of enabling using the steam from the steam supply source also to sterilize the liquefying tank and the delivery pipe, in addition to heating the raw material in the liquefying tank.

The liquefying device according to claim 4 provides the following effect, in addition to the effect provided by the liquefying device according to claim 3. A plurality of fermenters are connected to the delivery pipe, and which one of the plurality of fermenters is to be communicated with the delivery pipe can be switched by the second switching valve. Thus, for example, after the liquefied raw material has been delivered to the empty fermenter, if another empty fermenter is communicated with the delivery pipe, the other empty fermenter can also be sterilized using the steam used when the delivery pipe is sterilized. This provides the effect of enabling using the steam from the steam supply source also to sterilize the plurality of fermenters.

The liquefying device according to claim 5 provides the following effect, in addition to the effect provided by the liquefying device according to claim 1. When heating the raw material introduced into the liquefying tank, steam at a first predetermined temperature (e.g., 100°C or more and less than 110°C) is supplied to the liquefying tank (first heating means), and thereafter steam at a second predetermined temperature (e.g., 115°C or more and less than 125°C) higher than the first predetermined temperature is supplied to the liquefying tank (second heating means). This makes it possible to heat the raw material to a certain degree, and thereafter rapidly increase the temperature of the raw material. Using a liquefied raw material obtained by such heating provides the effect of enabling brewing sake having good flavor.

The liquefying device according to claim 6 provides the following effect, in addition to the effect provided by the liquefying device according to claim 5. The time for which the raw material is heated with the steam at the first predetermined temperature (e.g., 100°C or more and less than 110°C) is longer than the time for which the raw material is heated with the steam at the second predetermined temperature (e.g., 115°C or more and less than 125°C). Accordingly, it is possible to gradually increase the temperature of the raw material, and thereafter rapidly increase the temperature of the raw material. Using a liquefied raw material obtained by such heating provides the effect of enabling brewing sake having good flavor.

The liquefying device according to claim 7 provides the following effect, in addition to the effect provided by the liquefying device according to claim 5. After the temperature of the raw material has been rapidly increased as described above, and the raw material is heated to 88°C or more and less than 92°C, steam at a third predetermined temperature (e.g., 100°C or more and less than 110°C) lower than the second predetermined temperature is supplied to the liquefying tank. This is because it is important that the raw material is rapidly heated in the temperature range from 70°C to 90°C, and rapid heating after the raw material has reached about 90°C is not needed to obtain sake having good flavor. That is, by supplying steam at a relatively low temperature to the liquefying tank after the raw material has been heated to 88°C or more and less than 92°C, it is possible to heat the raw material to 95°C or more and less than 99°C, while suppressing wasteful consumption of thermal energy. This provides the effect of enabling brewing sake having good flavor while reducing the cost for obtaining a liquefied raw material.

The liquefying device according to claim 8 provides the following effect, in addition to the effect provided by the liquefying device according to claim 7. The first predetermined temperature is 100°C or more and less than 110°C, the second predetermined temperature is 115°C or more and less than 125°C, and the third predetermined temperature is 100°C or more and less than 110°C. Using a liquefied raw material obtained by such heating provides the effect of enabling brewing sake having good flavor.

The liquefying method according to claim 9 uses a liquefying device including: a liquefying tank into which a raw material composed of rice and water is introduced; and a supply pipe having a leading end connected to a bottom portion of the liquefying tank, the supply pipe being configured to supply steam from a steam supply source to the interior of the liquefying tank. Thus, as in the case of claim 1, it is possible to obtain a liquefied raw material without scorch, and therefore using this liquefied raw material without scorch provides the effect of enabling brewing sake having good flavor.

In the liquefying method according to claim 9, a first heating step of supplying steam at a first predetermined temperature (e.g., 100°C or more and less than 110°C) from the supply pipe to the liquefying tank into which the raw material has been introduced, and a second heating step of, after the first heating step, supplying steam at a second predetermined temperature (e.g., 115°C or more and less than 125°C) higher than the first predetermined temperature from the supply pipe to the liquefying tank are sequentially performed. Thus, it is possible to heat the raw material to a certain temperature by the first heating step, and thereafter rapidly increase the temperature of the raw material by the second heating step. Using a liquefied raw material obtained by such heating provides the effect of enabling brewing sake having good flavor.

The liquefying method according to claim 10 provides the following effect, in addition to the effect provided by the liquefying method according to claim 9**.** In the step of introducing the raw material into the liquefying tank, first, water is introduced into the liquefying tank (first step). After introducing water into the liquefying tank, steam is supplied to the liquefying tank to heat the water to 38°C or more and less than 42°C (second step), and rice is introduced into the heated water (third step). Heating the water to a certain degree before introduction of the rice in this manner provides the effect of enabling efficiently heating the raw material in a subsequent heating step.

The liquefying method according to claim 11 provides the following effect, in addition to the effect provided by the liquefying method according to claim 10. When introducing rice into the water in the third step, the temperature of the water is maintained at 38°C or more and less than 42°C until the introduction of the rice is completed. Thus, the amount of water absorption of the raw material (rice) is likely to be uniform before heating of the raw material is started. Using a liquefied material having a uniform amount of water absorption provides the effect of enabling brewing sake having good flavor.

### BRIEF DESCRIPTION OF THE DRAWINGS

[FIG. 1] A schematic diagram of a liquefying device.
[FIG. 2] A graph showing the change in temperature of a raw material in a process of obtaining a liquefied raw material.
[FIG. 3] A schematic diagram of the liquefying device showing a state in which a liquefied material is delivered to a fermenter.
[FIG. 4] A schematic diagram of the liquefying device showing a state in which a liquefying tank having become empty is sterilized with steam.
[FIG. 5] A schematic diagram of the liquefying device showing a state in which a delivery pipe is sterilized with steam.

### MODES FOR CARRYING OUT THE INVENTION

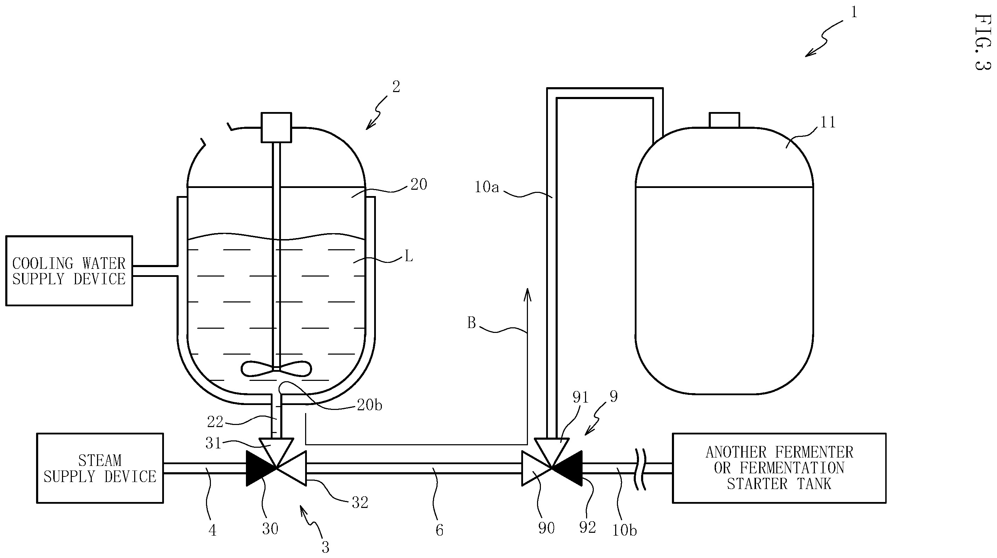

Hereinafter, a preferred embodiment will be described with reference to the accompanying drawings. First, an overall configuration of a liquefying device 1 will be described with reference to FIG. 1. FIG. 1 is a schematic diagram of the liquefying device 1. Note that FIG. 1 schematically shows a cross section of a liquefying tank 2**.** In FIG. 1, open and closed states of ports 30 to 32, 90 to 92 of switching valves 3, 9 are indicated by an unfilled portion or a filled portion, with the unfilled portion showing the open state and the filled portion showing the closed state (the same applies to FIGS. 3 to 5 described below).

As shown in FIG. 1, the liquefying device 1 includes the liquefying tank 2 for heating and liquefying rice and water (hereinafter, collectively referred to as a "raw material M")**.** The liquefying tank 2 includes a cylindrical container 20, and the open portion of the container 20 on the upper end side is configured to be opened and closed by a lid 21.

The lid 21 has an opening 21a, and the raw material M is introduced into the container 20 from the opening 21a. The introduction of the raw material M may be performed manually, or may be performed through an introduction path formed by a pipe arrangement, a hopper, or the like.

One end of a first supply pipe 22 for supplying steam to the container 20 is connected to a bottom surface 20a in the container 20, and the other end of the first supply pipe 22 is connected to a switching valve 3. In the present embodiment, the first supply pipe 22 is formed integrally with the container 20. However, the first supply pipe 22 may be configured to be attachable to and detachable from the container 20 via a joint or the like.

The switching valve 3 is a three-way valve (ball valve) including three ports 30 to 32, and the first supply pipe 22 is connected to the port 31. A steam supply device 5 is connected to the port 30 of the switching valve 3 via a second supply pipe 4, and a delivery pipe 6 for delivering the raw material M from the liquefying tank 2 is connected to the port 32.

The supply device 5 is a device that heats water supplied from a supply source (not shown) to generate steam, and the steam generated by the supply device 5 is pumped by the pressure of a pump (not shown) through a second supply pipe 4.

When the steam passing through the second supply pipe 4 is supplied to the container 20 of the liquefying tank 2, the port 30 and the port 31 of the switching valve 3 are open, while the port 32 is blocked. That is, a state (first state) in which the supply of steam from the supply pipes 4, 22 to the liquefying tank 2 is enabled, while the supply of steam from the second supply pipe 4 to the delivery pipe 6 is blocked is brought about. Thus, the steam from the supply device 5 is supplied to the container 20 through the second supply pipe 4, the switching valve 3, and the first supply pipe 22 (see path A).

One end of the first supply pipe 22 (i.e., a leading end of a pipe arrangement composed of the first supply pipe 22 and the second supply pipe 4) is connected to a lower surface of the container 20 of the liquefying tank 2, and a supply opening 20b of steam from the first supply pipe 22 is formed in the bottom surface 20a of the container 20. Accordingly, the raw material M stored in the container 20 is directly heated with the steam rising from the supply opening 20b. As a result of the raw material M being boiled by this heating, a raw material (hereinafter, referred to as a "liquefied raw material") of liquefied rice is obtained.

In the present embodiment, the first supply pipe 22 is connected to the bottom portion of the container 20 in this manner, so that a liquid surface Ma of the raw material M will not come into contact with the pipe arrangement for supplying steam. Accordingly, even in the case where the raw material M is boiled up by passing high-temperature steam through the first supply pipe 22, it is possible to obtain a liquefied raw material without scorch. By using this liquefied raw material without scorch to brew sake, it is possible to brew sake having good flavor, and brew sake without discoloration due to scorching.

The supply opening 20b of steam is formed at the center (position overlapping the axis of the cylindrical container 20) of the bottom surface 20a of the container 20, and a stirrer 7 is provided above the supply opening 20b. The stirrer 7 includes a motor 70 fixed to the lid 21 of the liquefying tank 2, and a rotational shaft 71 that is rotated by the power of the motor 70 extends downward from the motor 70.

A stirring blade 72 is attached to a lower portion of the rotational shaft 71, and the raw material M is heated while being stirred by rotation of the stirring blade 72. The stirring blade 72 is disposed at a position vertically overlapping the supply opening 20b of steam, so that the steam rising from the supply opening 20b is diffused throughout the raw material M by rotation of the stirring blade 72. Accordingly, the raw material M in the container 20 can be efficiently heated.

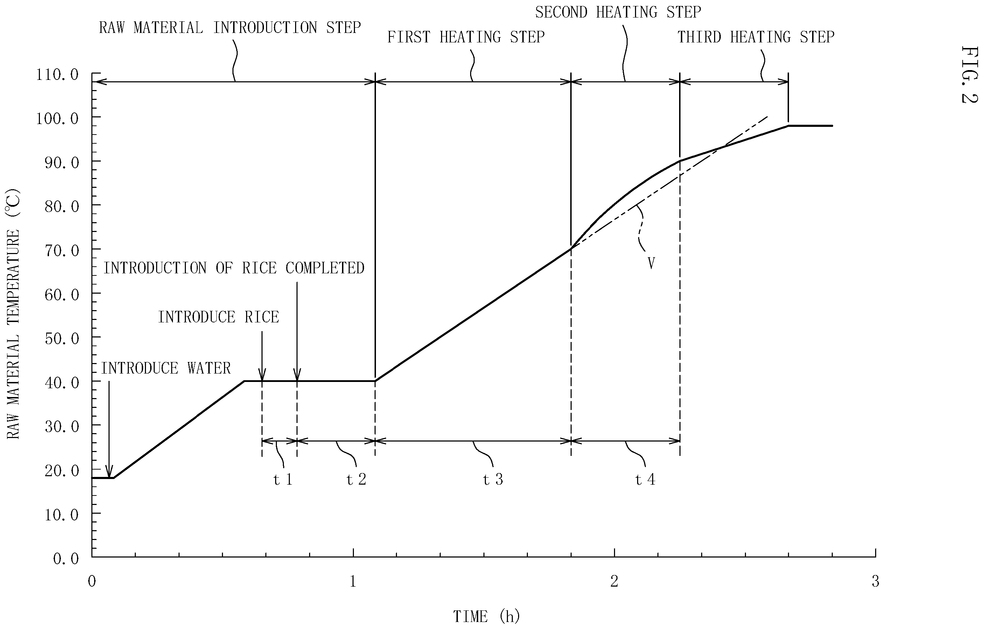

Next, a process of obtaining a liquefied material from the raw material M will be described in detail with reference to FIG. 2. FIG. 2 is a graph showing the change in temperature of the raw material M in the process of obtaining a liquefied raw material, with the vertical axis representing the temperature (°C) of the raw material M and the horizontal axis representing the elapsed time (h) of each step.

As shown in FIG. 2, in the process of obtaining the liquefied material, first, a raw material introduction step of introducing the raw material M into the container 20 is performed. In the raw material introduction step, only water is introduced into the container 20 (first step). After the introduction, steam at about 105°C (100°C or more and less than 110°C) is supplied to the liquefying tank 2, thus heating the water at around room temperature (18°C in the example shown in FIG. 2) to about 40°C (38°C or more and less than 42°C) (second step).

Then, rice is introduced into the heated water (third step). After the introduction of rice, first to third heating steps of heating the raw material M composed of the water and the rice in three stages are performed. By heating the water to about 40°C before introduction of the rice in this manner, the raw material M can be efficiently heated in a subsequent heating step.

The amount of supply of the steam to the liquefying tank 2 (or the temperature of the steam) is adjusted such that the water is maintained at about 40°C until the introduction of rice is completed. When rice is introduced, the raw material M is stirred by the stirring blade 72, and the stirring by the stirring blade 72 is continued also after the introduction of rice. This allows the heated water to easily harmonize with the rice, so that heating (first heating step) can be started after the temperature or the amount of water absorption of the raw material M (rice) has become uniform. By making the amount of water absorption of the rice uniform before heating of the raw material M is started, boiling of the raw material M can be performed suitably.

Here, the expression "boiling of the raw material M is performed suitably" means that, in the case where sake is brewed using a liquefied material obtained after boiling the raw material M, sake having good flavor similar to the existing sake (sake brewed by a traditional manufacturing process that uses steamed rice) can be obtained. Hereinafter, making such a liquefied material that provides sake having good flavor may be simply described as "boiling of the raw material M can be performed suitably".

After completion of the introduction of rice, the temperature of the raw material M is maintained at about 40°C until heating (first heating step) of the raw material M is started, and a time t2 from completion of the introduction of rice to start of heating of the raw material M is set to be longer than a time t1 from start of the introduction of rice to completion thereof. This also allows the heated water to easily harmonize with the rice, thus making the amount of water absorption of the rice uniform.

At the time at which a predetermined time (t2) has elapsed since completion of the introduction of rice, the first heating step, which is a first stage of heating of the raw material M, is started. In the first heating step, heating of the raw material M is performed by supplying steam at about 105°C (first predetermined temperature) to the liquefying tank 2. Thus, the temperature of the raw material M increases substantially proportionally, and the second heating step is started when the temperature of the raw material M has reached about 70°C (68°C or more and less than 72°C).

In the second heating step, steam at about 120°C (second predetermined temperature), which is higher than that in the first heating step, is supplied to the liquefying tank 2. This makes it possible to rapidly increase the temperature of the raw material M after the raw material M has been heated to a certain degree. More specifically, when a virtual line V is created by extending the graph showing the proportional change in temperature of the raw material M in the first heating step, the supply of steam to the liquefying tank 2 is controlled in the second heating step such that the temperature of the raw material M transitions to a temperature higher than the virtual line V and in a protruding curved line.

By performing such heating of the raw material M, boiling of the raw material M can be performed suitably. This is presumably because, when the raw material M at about 70°C is rapidly heated to about 90°C, the activity of the enzymes of the raw material M is enhanced. By brewing sake using the liquefied material obtained by such rapid heating of the raw material M, it is possible to brew sake having good flavor similar to that obtained using steamed rice.

A heating time t3 in the first heating step is longer than a heating time t4 in the second heating step. That is, as described above, in the second heating step, the raw material M at about 70°C is rapidly heated to about 90°C, whereas, in the first heating step, the raw material M that has been at about 40°C at the start of the first heating step is gradually heated to about 70°C. Thus, boiling of the raw material M can be performed suitably.

The third heating step is started when the temperature of the raw material M has reached about 90°C (88°C or more and less than 92°C) by the heating in the second heating step. In the third heating step, steam at about 105°C (third predetermined temperature), which is lower than the temperature of the steam in the second heating step, is supplied to the liquefying tank 2. Thus, after the raw material M has been rapidly heated in the second heating step, the temperature of the raw material M gradually (slowly as compared with the second heating step) increases, and the raw material M is heated to about 98°C (95°C or more and less than 99°C).

This is because, taking the activity of the enzymes of the raw material M described above into consideration, it is important that the raw material M at about 70°C is rapidly heated to about 90°C, and rapid heating after the raw material M has reached about 90°C is not needed to obtain sake having good flavor. That is, although sake having good flavor can be obtained by continuing rapid heating of the raw material M that has reached about 90°C, to about 98°C, such rapid heating wastes thermal energy.

In contrast, as in the present embodiment, by supplying steam at a relatively low temperature to the liquefying tank when the raw material M has been heated to about 90°C, it is possible to heat the raw material to about 98°C, while suppressing wasteful consumption of thermal energy. This makes it possible to brew sake having good flavor while reducing the cost for obtaining a liquefied raw material.

Although, in the present embodiment, the temperature of the steam in the first and third heating steps is about 105°C, and the temperature of the steam in the second heating step is about 120°C, it is preferable that steam at 100°C or more and less than 110°C is supplied to the liquefying tank 2 in the first and third heating steps, and that steam at 115°C or more and less than 125°C is supplied to the liquefying tank 2 in the second heating step. By brewing sake from a liquefied material obtained by such heating of the raw material M, it is possible to obtain sake having good flavor.

A description will be given referring back to FIG. 1. The liquefied raw material obtained by heating of the raw material M is cooled by cooling water supplied to a jacket 23. The jacket 23 covers the outer peripheral surface and the lower surface of the container 20 over the entire periphery (except for the region forming the first supply pipe 22) of the container 20.

A cooling water supply device 8 is connected to the jacket 23, and the liquefied raw material in the container 20 of the liquefying tank 2 is cooled to a temperature of 15°C or more and less than 20°C by the cooling water supplied to the jacket 23 from the supply device 8. The cooled liquefied raw material is delivered from the liquefying tank 2 via the delivery pipe 6.

One end of the delivery pipe 6 is connected to the port 32 of the switching valve 3, and the other end thereof is connected to the port 90 of the switching valve 9. Similar to the switching valve 3, the switching valve 9 is a three-way valve including three ports 90 to 92. One end of a branch pipe 10a, 10b is connected to the port 91, 92 of the switching valve 9, and a fermenter 11 is connected to the other end of the branch pipe 10a. Another fermenter (not shown) and a fermentation starter tank are connected to the other end of the branch pipe 10b via a switching valve or the like.

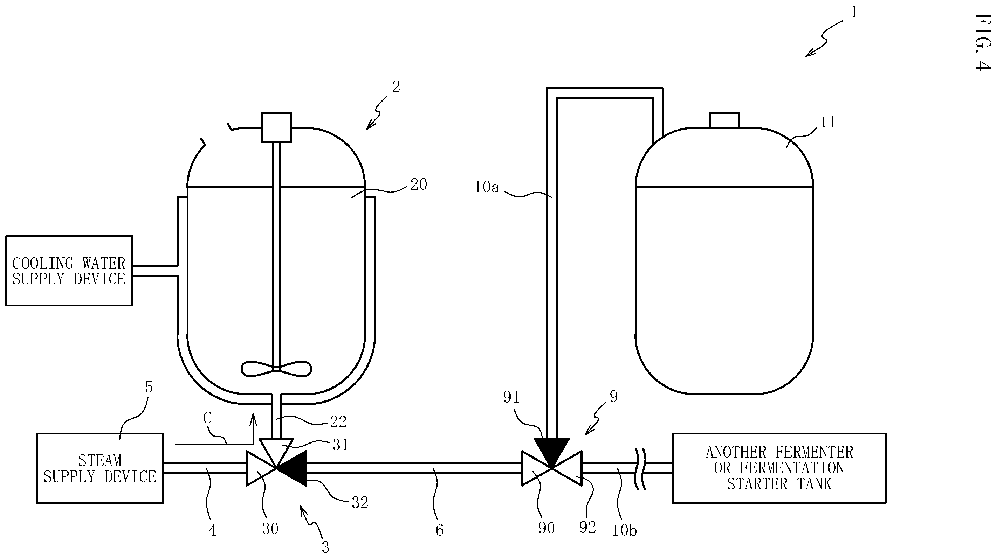

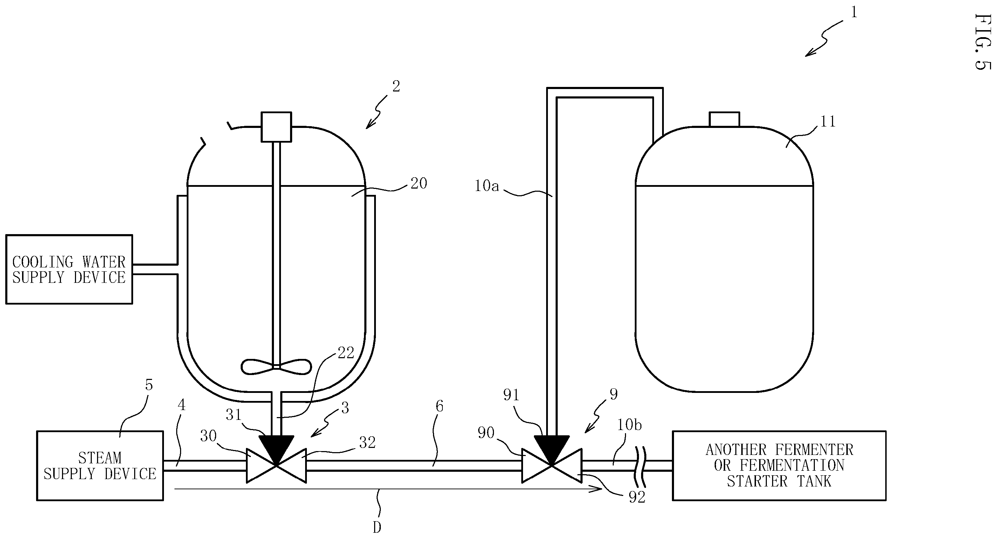

Next, a step performed after a liquefied material L has been obtained by heating of the raw material M will be described with reference to FIGS. 3 to 5. FIG. 3 is a schematic diagram of the liquefying device 1 showing a state in which the liquefied material L is delivered to the fermenter 11, FIG. 4 is a schematic diagram of the liquefying device 1 showing a state in which the liquefying tank 2 having become empty is sterilized with steam, and FIG. 5 is a schematic diagram of the liquefying device 1 showing a state in which the delivery pipe 6 is sterilized with steam.

As shown in FIG. 3, when the liquefied material L is delivered from the liquefying tank 2, the port 30 of the switching valve 3 is brought into the closed state, while the ports 31, 32 are brought into the open state. That is, the switching valve 3 is switched into a state (second state) in which the supply of steam from the second supply pipe 4 to the liquefying tank 2 is blocked, while the delivery of the liquefied raw material L from the liquefying tank 2 to the delivery pipe 6 is enabled. By activating a pump (not shown) in this state, the liquefied raw material L in the liquefying tank 2 can be delivered from the delivery pipe 6.

By branching (via the switching valve 3) the delivery pipe 6 for delivering the liquefied raw material L from the supply pipes 4, 22 in this manner, the liquefied raw material L can be delivered from the liquefying tank 2 using the first supply pipe 22 (a part of the pipe arrangement that supplies steam). That is, the first supply pipe 22 according to the present embodiment also has the function of delivering the liquefied raw material L out of the liquefying tank 2, in addition to the function of supplying steam to the interior of the liquefying tank 2. Accordingly, there is no need to separately provide the liquefying tank 2 with a part (a discharge opening of the liquefied raw material L that is separate from the supply opening 20b) for connecting the delivery pipe 6, and it is therefore possible to simplify the structure of the liquefying tank 2.

When the liquefied raw material L is delivered out of the delivery pipe 6, the ports 90, 91 of the switching valve 9 are brought into the open state, while the port 92 is brought into the closed state. Thus, the liquefied raw material L is supplied to the fermenter 11 through the delivery pipe 6, the switching valve 9, and the branch pipe 10a (see path B). Note that the fermenter 11 is a container for fermenting (making koji from) the liquefied raw material L, and can adopt a known configuration. Therefore, the detailed description thereof is omitted.

The empty liquefying tank 2 out of which the liquefied raw material L has been delivered to the fermenter 11 is subjected to water washing. The water that has been used to wash the liquefying tank 2 is discharged from the first supply pipe 22 by removing the switching valve 3 from the container 20.

Note, however, that the water that has been used to wash the liquefying tank 2 may be discharged from a drain valve (not shown) provided in, for example, the branch pipe 10b, without removing the switching valve 3 from the first supply pipe 22. Thus, the delivery pipe 6 can be washed with water. The water that has been used to wash the liquefying tank 2 may be supplied to another empty fermenter through the delivery pipe 6 and the branch pipe 10b, without being discharged from the drain valve. Thus, the other empty fermenter can be washed with water.

As shown in FIG. 4, after the liquefied material L (see FIG. 3) has been delivered from the container 20 of the liquefying tank 2, the port 30 and the port 31 of the switching valve 3 are opened, while the port 32 is blocked. Thus, since the steam from the supply device 5 is supplied to the interior of the container 20 through the second supply pipe 4, the switching valve 3, and the first supply pipe 22 (see path C), the empty liquefying tank 2 (the container 20 and the lid 21) that has been washed with water can be sterilized with steam.

When the liquefying tank 2 is sterilized, the port 32 of the switching valve 3 is in the closed state, so that no steam will be supplied to the side downstream of the delivery pipe 6. However, it is preferable that the port 91 of the switching valve 9 is brought into the closed state, while the ports 90, 92 are brought into the open state. Thus, even if steam is supplied to the delivery pipe 6 side due to some problem, it is possible to inhibit the steam from being sent into the fermenter 11 in which the liquefied material L is stored.

As shown in FIG. 5, after the container 20 or the like of the liquefying tank 2 has been sterilized, the port 31 of the switching valve 3 is brought into the closed state, while the ports 30, 32 are brought into the open state. That is, the switching valve 3 is switched into a state (third state) in which the supply of steam from the supply pipes 4, 22 to the liquefying tank 2 is blocked, while the supply of steam from the supply device 5 (second supply pipe 4) to the delivery pipe 6 is enabled. Thus, the steam from the supply device 5 is supplied to the delivery pipe 6 (see path D), so that the delivery pipe 6 can be sterilized.

In the case where the steam from the supply device 5 is supplied to the delivery pipe 6, the port 91 of the switching valve 9 is brought into the closed state, while the ports 90, 92 are brought into the open state, whereby steam can be sent to another empty fermenter through the branch pipe 10b. Accordingly, it is possible to sterilize the other empty fermenter.

In this manner, the liquefying device 1 according to the present embodiment is configured to be capable of switching, using the switching valve 9, which fermenter 11 is to be communicated with the delivery pipe 6 among a plurality of fermenters including the fermenter 11. Thus, after the liquefied raw material L in the liquefying tank 2 has been delivered to the fermenter 11 that is empty, if another empty fermenter is communicated with the delivery pipe 6, the other empty fermenter can also be sterilized using the steam used when the delivery pipe 6 is sterilized.

That is, with the liquefying device 1 according to the present embodiment, the steam supplied from the supply device 5 can be used to perform not only heating of the raw material M (see FIG. 1) in the liquefying tank 2, but also sterilization of the liquefying tank 2, the delivery pipe 6, and a fermenter (empty fermenter to which the liquefied raw material has not been supplied). Accordingly, the liquefying device 1 can be maintained in a sanitary condition.

Although the present invention has been described above based on the above embodiment, it can be readily inferred that the present invention is by no means limited to the above embodiment, and various improvements and modifications can be made without departing from the scope of the present invention.

Although description has been omitted in the above embodiment, the control of the temperature (temperature of the steam supplied to the liquefying tank 2) of the raw material M in the first to third heating steps of heating the raw material M is executed using a control program of a control device included in the liquefying device 1**.**

The control program is a program for controlling, based on a value of a sensor that measures the temperature in the liquefying tank 2, the temperature of the steam supplied to the liquefying tank 2 (or the amount of supply of the steam). The control program is configured to: control the steam supply device 5 so as to supply steam at about 105°C to the liquefying tank 2 when a predetermined time (t2) has elapsed from completion of introduction of rice (first heating means); control the steam supply device 5 so as to supply steam at about 120°C to the liquefying tank 2 when the temperature of the raw material M detected by a sensor is about 70°C (second heating means); and control the steam supply device 5 so as to supply steam at about 105°C to the liquefying tank 2 when the temperature of the raw material M detected by the sensor is 90°C (third heating means).

Although the above embodiment has described a case where steam at about 105°C, steam at about 120°C, and steam at about 105°C are supplied to the liquefying tank 2 in the first heating step, the second heating step, and the third heating step, respectively, the present invention is not necessarily limited thereto. For example, steam at about 120°C may be supplied to the liquefying tank 2 in the third heating step. During a period from start of the heating of the raw material M until the raw material M reaches about 98°C, steam at about 105°C may be continuously supplied to the liquefying tank 2, or steam at about 120°C may be continuously supplied to the liquefying tank 2. In the first to third heating steps, steam at less than 100°C or 125°C or more may be supplied to the liquefying tank 2.

Although the above embodiment has described a case where the second heating step is started when the temperature of the raw material M reaches about 70°C, and the heating time t4 in the second heating step is shorter than the heating time t3 in the first heating step, the present invention is not necessarily limited thereto. For example, the second heating step may be started when the temperature of the raw material M reaches 50°C or more and less than 60°C, and the heating time t4 in the second heating step may be longer than the heating time t3 of the first heating step.

Although the above embodiment has described a case where the introduction of rice is started after the temperature of the water reaches about 40°C, and the temperature of the water (raw material M) is maintained at about 40°C until completion of the introduction of rice, the present invention is not necessarily limited thereto. For example, the introduction of rice may be started from a state in which water is at room temperature, or rice may be introduced while increasing the temperature of the water (raw material M). That is, the first heating step may be started at the start, or in the middle, of the introduction of rice.

Although the above embodiment has described a case where the delivery pipe 6 is connected to the first supply pipe 22 and the second supply pipe 4 via the switching valve 3, the present invention is not necessarily limited thereto. For example, the delivery pipe 6 may be directly connected to the container 20.

Although the above embodiment has described a case where three states, namely, a state in which steam is supplied to the liquefying tank 2 (first state), a state in which the liquefied material L is delivered from the liquefying tank 2 (second state), and a state in which steam is supplied to the delivery pipe 6 (third state), are switched by the switching valve 3 implemented by a three-way valve, the present invention is not necessarily limited thereto. For example, the switching valve 3 may be omitted, and the above-described three states may be switched by branch-connecting each of the supply pipes 4, 22 and the delivery pipe 6 and providing each of the pipes with an open/close valve (that opens/closes the flow path of the pipe).

Although the above embodiment has described a case where the delivery pipe 6 for delivering the liquefied material L is connected to the liquefying tank 2, the present invention is not necessarily limited thereto. For example, the liquefied material L may be discharged to the outside of the container 20 by tilting the liquefying tank 2 (container 20) instead of using a pipe such as the delivery pipe 6**.**

Although the above embodiment has described a case where a plurality of fermenters including the fermenter 11 or fermentation starter tanks are connected to the delivery pipe 6, the present invention is not necessarily limited thereto. For example, one fermenter 11 may be connected to the delivery pipe 6.

Although description has been omitted in the above embodiment, each of the first supply pipe 22, the second supply pipe 4, the delivery pipe 6, and the branch pipes 10a, 10b may be composed of one pipe, or may be composed of a plurality of pipes that can be attached to and detached from each other. Each of the first supply pipe 22, the second supply pipe 4, the delivery pipe 6, and the branch pipes 10a, 10b is preferably composed of a sanitary pipe. Sanitary pipes are pipes that: each have an inner surface and an outer surface that are polished (mirror polished); are attachable to and detachable from each other; and have no step on the inner surface of a connection portion between the pipes. By using such sanitary pipes, the pipes can be disassembled and easily cleaned, and stains are less likely to be accumulated in the pipes. Accordingly, the liquefying device 1 can be maintained in a sanitary condition.

### DESCRIPTION OF REFERENCE NUMERALS

1 liquefying device
2 liquefying tank
22 first supply pipe (part of supply pipe)
3 switching valve (first switching valve)
4 second supply pipe (part of supply pipe)
5 supply device (steam supply source)
6 delivery pipe
9 switching valve (second switching valve)
11 fermenter

## Claims

1. A liquefying device comprising:
a liquefying tank into which a raw material composed of rice and water is introduced; and
a supply pipe having a leading end connected to a bottom portion of the liquefying tank, the supply pipe being configured to supply steam from a steam supply source to an interior of the liquefying tank.

2. The liquefying device according to claim 1, comprising
a delivery pipe branched from the supply pipe, wherein
a liquefied raw material obtained by liquefying the raw material is delivered from the liquefying tank via the supply pipe and the delivery pipe.

3. The liquefying device according to claim 2, comprising
a first switching valve capable of switching between: a first state in which supply of steam from the supply pipe to the delivery pipe is blocked, while supply of steam from the supply pipe to the liquefying tank is enabled; a second state in which supply of steam from the supply pipe to the liquefying tank is blocked, while delivery of the liquefied raw material from the liquefying tank to the delivery pipe is enabled; and a third state in which supply of steam from the supply pipe to the liquefying tank is blocked, while supply of steam from the supply pipe to the delivery pipe is enabled.

4. The liquefying device according to claim 3, comprising:
a plurality of fermenters configured to be connected to the delivery pipe; and
a second switching valve capable of switching which one of the plurality of fermenters is to be communicated with the delivery pipe.

5. The liquefying device according to claim 1, comprising:
first heating means configured to supply steam at a first predetermined temperature from the supply pipe to the liquefying tank into which the raw material has been introduced; and
second heating means configured to, after the steam has been supplied by the first heating means, supply steam at a second predetermined temperature higher than the first predetermined temperature from the supply pipe to the liquefying tank.

6. The liquefying device according to claim 5, wherein
a heating time of the raw material by the first heating means is longer than a heating time of the raw material by the second heating means.

7. The liquefying device according to claim 5, comprising
third heating means configured to, after the raw material has been heated to a temperature of 88°C or more and less than 92°C by the second heating means, supply steam at a third predetermined temperature lower than the second predetermined temperature from the supply pipe to the liquefying tank, wherein
the raw material is heated to 95°C or more and less than 99°C by the third heating means.

8. The liquefying device according to claim 7, wherein
the first predetermined temperature is 100°C or more and less than 110°C,
the second predetermined temperature is 115°C or more and less than 125°C, and
the third predetermined temperature is 100°C or more and less than 110°C.

9. A raw material liquefying method using a liquefying device including a liquefying tank into which a raw material composed of rice and water is introduced, and a supply pipe having a leading end connected to a bottom portion of the liquefying tank, the supply pipe being configured to supply steam from a steam supply source to an interior of the liquefying tank, the liquefying method comprising:
a first heating step of supplying steam at a first predetermined temperature from the supply pipe to the liquefying tank into which the raw material has been introduced; and
a second heating step of, after the first heating step, supplying steam at a second predetermined temperature higher than the first predetermined temperature from the supply pipe to the liquefying tank.

10. The liquefying method according to claim 9, comprising
a raw material introduction step of introducing the raw material into the liquefying tank before the first heating step, wherein
the raw material introduction step includes: a first step of introducing water into the liquefying tank; a second step of, after the first step, supplying steam from the supply pipe to the liquefying tank to heat the water to 38°C or more and less than 42°C; and a third step of introducing rice into the water heated by the second step.

11. The liquefying method according to claim 10, wherein,
in the third step, a temperature of the water is maintained at 38°C or more and less than 42°C from introduction of the rice to completion of the introduction.
